# EUROPÄISCHE PATENTSCHRIFT

(11) **EP 3 081 124 B1**
(45) Veröffentlichungstag und Bekanntmachung des Hinweises auf die Patenterteilung: **17.07.2019**
(21) Anmeldenummer: 16164712.8
(22) Anmeldetag: 11.04.2016
(51) Int. Cl.: A47J 31/44

(54) **KAFFEEAUTOMAT**
COFFEE MACHINE
MACHINE À CAFÉ

(30) Priorität: 16.04.2015 DE 102015206924
(43) Veröffentlichungstag der Anmeldung: 19.10.2016
(73) Patentinhaber: BSH Hausgeräte GmbH, 81739 München (DE)
(72) Erfinder: Kirschner, Andreas, 83301 Traunreut (DE); Koch, Franz, 83454 Anger (DE)

(56) Entgegenhaltungen:
- EP-A1- 2 253 253
- WO-A1-2014/206495
- CN-Y- 201 213 432

## Beschreibung

Die vorliegende Erfindung betrifft einen Kaffeeautomaten mit einem Feuchtraum und einem davon getrennten Trockenraum.

Im Betrieb von Kaffeeautomaten entsteht bedingt durch die Verwendung von heißem Wasser eine sehr hohe relative Luftfeuchtigkeit im Kaffeeautomaten. Die Luftfeuchtigkeit verteilt sich dabei unter Umständen unkontrolliert im Geräteinneren und kondensiert insbesondere an denjenigen Stellen ab, an denen die Bauteil-/Komponententemperatur am geringsten ist, also beispielsweise in der Nähe eines Wassertanks. Durch diesen auch "Bierflascheneffekt" genannten Effekt kann es zu einer Kondensation des Wasserdampfs an den kühlen Oberflächen und einem Sammeln bzw. Abfließen von Wasser an diesen Stellen kommen. Besonders problematisch ist dabei, nicht nur das weitere unkontrollierte Abfließen von kondensiertem Wasser, sondern generell auch die Bedampfung des Geräteinneren im Bereich einer Steuerungselektronik.

Aus den Druckschriften EP 2 253 253 A1, WO 2014/206495 A1 und CN 201 213 432 Y ist jeweils eine Getränkemaschine, beispielsweise Kaffeemaschine, bekannt, die eine Belüftungsstruktur für das Innere der Getränkemaschine umfasst, wobei die Belüftungsstruktur einen Lüftungskanal aufweist, der über eine Öffnung mit der Umgebung verbunden ist.

Die vorliegende Erfindung beschäftigt sich daher mit dem Problem, für einen Kaffeeautomaten eine verbesserte Ausführungsform anzugeben, welche insbesondere eine unkontrollierte Kondensation von Wasser in einem Geräteinneren bzw. ein unkontrolliertes Bedampfen des Geräteinneren zuverlässig unterbindet und zugleich eine gesteigerte Funktionalität aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen speziellen Lüftungskanal in einem Kaffeeautomaten vorzusehen, über welchen ein Feuchtraum des Kaffeeautomaten belüftet und damit eine unkontrollierte Bedampfung bzw. eine unkontrollierte Kondensation von Wasserdampf eines Geräteinneren zuverlässig vermieden werden können. Hierzu weist der erfindungsgemäße Kaffeeautomat den zuvor genannten Feuchtraum sowie einen davon abgetrennten Trockenraum auf, wobei der Feuchtraum
über den Lüftungskanal mit einer Öffnung an einem oben angeordneten Deckel und über eine Frischluftöffnung mit der Umgebung verbunden ist. Die Öffnung ist dabei derart am Deckel angeordnet, dass sie zugleich als Abflussöffnung für sich auf dem Deckel befindlicher Flüssigkeit dient, die über die Abflussöffnung und den Lüftungskanal in den Feuchtraum abgeleitet werden kann. Der Lüftungskanal erfüllt somit zwei Funktionen, nämlich einerseits die Belüftung und damit auch die Trocknung des Feuchtraums und andererseits die Funktion eines Wasserablaufs, welcher beispielsweise bei einem versehentlich auf den Deckel abgestellten und umgeworfenen Getränkebehälter dafür sorgt, dass die daraus austretende Flüssigkeit nicht in das Geräteinnere eindringt und dort unter Umständen zu Beschädigungen führt, sondern zuverlässig über die Öffnung im Deckel in den Feuchtraum und von dort gegebenenfalls weiter in eine Tropfschale abgeleitet werden kann. Im normalen Betriebszustand sorgt somit der Lüftungskanal mit seiner im unteren Bereich, insbesondere in einem bodennahen Bereich, angeordneten Frischluftöffnung und seiner darüber im Deckel angeordneten (Abfluss-)Öffnung für einen Kamineffekt, der durch die im Geräteinneren herrschende Wärme eine ständige Belüftung und damit auch Trocknung des Feuchtraums bewirkt. Insbesondere kann durch den Lüftungskanal vermieden werden, dass sich die im Feuchtraum befindliche Feuchtigkeit unkontrolliert im Geräteinneren verteilt und beispielsweise an kalten Oberflächen niederschlägt oder sonstige Komponenten bezüglich ihrer Funktionsfähigkeit beeinträchtigt. Eine derartige Beeinträchtigung der Funktionsfähigkeit könnte insbesondere dort erfolgen, wo eine erhöhte Feuchtigkeit langfristig zu einem Verkleben bzw. einem verstärkten Verschmutzen führt. Generell ist selbstverständlich in jedem Kaffeeautomaten im Betrieb ständig Feuchtigkeit vorhanden, die beispielsweise während des Brühprozesses aber auch durch den nach dem Brühprozess ausgeworfenen Kaffeetrester entsteht.

Bei einer vorteilhaften Weiterbildung der erfindungsgemäßen Lösung ist der Feuchtraum mit einer Tropfschale verbunden. Dies bietet den besonderen Vorteil, dass für den Fall, dass auf dem Deckel ein Getränkebehälter unbeabsichtigt umgestoßen wurde und Flüssigkeit ausgetreten ist, welche anschließend über die Öffnung in den Lüftungskanal in den Feuchtraum abfließt, diese Flüssigkeit nicht durch ein reines Trocknen wieder aus dem Feuchtraum entfernt werden muss, sondern direkt an die Tropfschale weitergeleitet und von dort entsorgt werden kann. Da die Tropfschale ohnehin turnusmäßig geleert wird, ist eine derartige Verbindung zwischen dem Feuchtraum und der Tropfschale besonders vorteilhaft.

Bei einer weiteren vorteilhaften Ausführungsform der erfindungsgemäßen Lösung ist eine Brüheinrichtung vorgesehen, die zumindest in geöffnetem Zustand mit dem Lüftungskanal verbunden ist. Da beim Öffnen einer Brühkammer der Brüheinrichtung Wasserdampf austritt, ist es vorteilhaft, diesen sofort über den Lüftungskanal in die Umgebung abzuleiten und dadurch zu verhindern, dass sich dieser Wasserdampf an kalten benachbarten Oberflächen niederschlägt. Durch die (Zwangs-)Belüftung aufgrund des Kamineffektes lässt sich somit bereits ein wesentlicher Anteil des in dem Kaffeeautomaten entstehenden Wasserdampfs abführen.

Zweckmäßig ist die Brüheinrichtung über einen Tresterkanal mit dem Feuchtraum verbunden. Nach Abschluss des Brühprozesses wird üblicherweise ein Tresterkuchen aus gepresstem und feuchtem Kaffeemehl ausgeworfen, wobei dieser Trester über den zuvor erwähnten Tresterkanal in den Feuchtraum entsorgt werden kann. Da der Feuchtraum über den Lüftungskanal belüftet wird, kann auch die durch den Trester im Feuchtraum eingebrachte erhöhte Luftfeuchtigkeit optimal abgeführt werden.

Bei einer weiteren vorteilhaften Ausführungsform der erfindungsgemäßen Lösung weist der Deckel einen geneigten Boden auf, an dessen tiefster Stelle die Öffnung, das heißt die Abflussöffnung angeordnet ist. Die Neigung des Bodens ist dabei selbstverständlich so gering, dass ein sicheres Abstellen von Getränkebehältern problemlos möglich ist, jedoch ein selbststätiges Abfließen von versehentlich ausgeschütteter Flüssigkeit, beispielsweise aus einem Getränkebehälter oder einem Wassertank, zuverlässig bewirkt werden kann. Hierfür reicht möglicherweise bereits eine Neigung von ca. 1 bis 1,5 % aus.

Zweckmäßig ist der Deckel als einstückiges Kunststoffspritzgussteil ausgebildet. Hierdurch ist es möglich, den Deckel samt Öffnung und Boden einerseits kostengünstig und anderseits mit nahezu frei wählbarer Formgebung herzustellen. Darüber hinaus ist auch vergleichsweise einfach eine individuelle Farbgebung durch Verwendung eines entsprechend pigmentierten Kunststoffs möglich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Kaffeeautomaten,
- Fig. 2: eine Detailschnittdarstellung durch den erfindungsgemäßen Kaffeeautomaten der Fig. 1, jedoch aus einer anderen Perspektive.

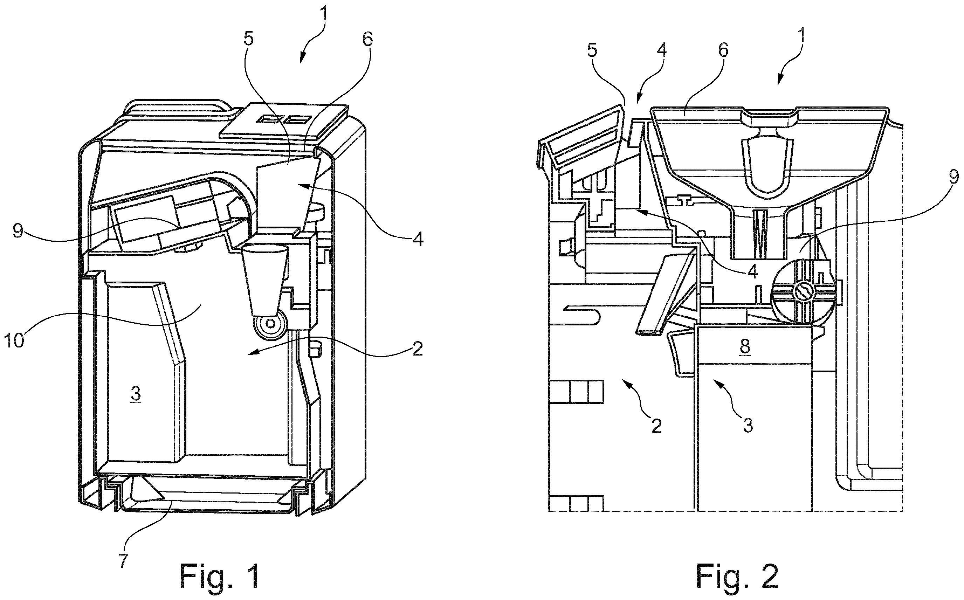

Entsprechend den Fig. 1 und 2, weist ein erfindungsgemäßer Kaffeeautomat 1 einen Feuchtraum 2 sowie einen feuchtetechnisch davon getrennten Trockenraum 3 auf. Erfindungsgemäß ist dabei der Feuchtraum 2 über einen Lüftungskanal 4 mit einer Öffnung 5 an einem oben angeordneten Deckel 6 und über eine nicht gezeigte, da sich außerhalb der Schnittebene befindliche Frischluftöffnung mit der Umgebung verbunden. Die Frischluftöffnung ist dabei vorzugsweise deutlich unterhalb der Öffnung 5 im Feuchtraum 2 angeordnet, so dass über die Frischluftöffnung, den Feuchtraum 2, den Lüftungskanal 4 und die oben angeordnete Öffnung 5 ein Kamineffekt entsteht, der eine Art Zwangsbelüftung und dadurch ein Trocknen des Feuchtraums 2 bzw. ein Abführen von darin enthaltenem Wasserdampf bewirkt. Zugleich ist die Öffnung 5 derart am Deckel 6 angeordnet, dass sie als Abflussöffnung für sich auf dem Deckel 6 befindliche Flüssigkeit dient, die beispielsweise aus einem versehentlich umgeworfenen Getränkebehälter stammt. Über die zugleich als Abflussöffnung ausgebildete Öffnung 5 kann somit Flüssigkeit über den Lüftungskanal 4 in den Feuchtraum 2 abgeleitet werden, ohne dass dabei befürchtet werden muss, dass sich die Flüssigkeit unkontrolliert im Geräteinneren verteilt oder gar in den Trockenraum 3, in welchem oftmals eine Elektronik, insbesondere eine Steuerungselektronik 8, angeordnet ist, eindringen kann.

Um aus dem Feuchtraum 2 wiederum die dort ankommende Flüssigkeit ableiten zu können, ist der Feuchtraum 2 vorzugsweise mit einer darunter angeordneten Tropfschale 7 verbunden, die ohnehin turnusmäßig geleert wird. Sollte demzufolge in unbeabsichtigter Weise Flüssigkeit auf dem Deckel 6 ausgeschüttet werden, so gelangt diese über die Öffnung 5 und den Lüftungskanal 4 in den Feuchtraum 2 und kann von dort in die Tropfschale 7 abgeführt werden. Um eine zuverlässige Zuführung der auf dem Deckel 6 ausgeschütteten Flüssigkeit zur Öffnung 5 gewährleisten zu können, weist der Deckel 6 üblicherweise einen geneigten Boden auf, an dessen tiefster Stelle die als Abflussöffnung ausgebildete Öffnung 5 angeordnet ist.

Betrachtet man die Fig. 1 und 2, so kann man des Weiteren erkennen, dass eine Brüheinrichtung 9 vorgesehen ist, die zumindest in geöffnetem Zustand mit dem Lüftungskanal 4 verbunden ist. Hierdurch kann gewährleistet werden, dass nach Abschluss des Brühprozesses beim Öffnen der Brühkammer der daraus austretende Wasserdampf unmittelbar über den Lüftungskanal 4 in die Umgebung abgeführt wird und nicht zu einem Bedampfen des Geräteinneren und insbesondere einer unerwünschten Kondensation an kalten Oberflächen führt. Die Brüheinrichtung 9 ist des Weiteren über einen Tresterkanal 10 mit dem Feuchtraum 2 verbunden, so dass der aus der Brüheinrichtung 9 ausgeworfene Kaffeetrester direkt in den Feuchtraum 2 abrutschen kann und von dort die durch den Kaffeetrester erhöhte Luftfeuchtigkeit bzw. der durch den Trester bedingte Wasserdampf über den Lüftungskanal 4 abgeführt werden kann.

Mit dem erfindungsgemäßen Kaffeeautomaten 1 ist eine zuverlässige Abführung von Feuchtigkeit aus dem Geräteinneren, insbesondere aus dem Feuchtraum 2, möglich, wodurch ein unkontrolliertes und insbesondere auch unerwünschtes Bedampfen des Geräteinneren zuverlässig vermieden werden kann. Der Lüftungskanal 4 mit seiner oben angeordneten Öffnung 5 erfüllt darüber hinaus eine weitere Funktion, nämlich als Ablauf für versehentlich auf dem Deckel 6 ausgeschüttete Flüssigkeit, die über die Öffnung 5 und den Lüftungskanal 4 zuverlässig in den Feuchtraum 2 und gegebenenfalls von diesem in die Tropfschale 7 abgeleitet werden kann. Der Deckel 6 ist dabei vorzugsweise als einstückiges Kunststoffspritzgussteil ausgebildet, wodurch dessen Herstellung nicht nur fertigungstechnisch einfach und kostengünstig möglich ist, sondern auch äußerst flexibel bezüglich einer Form- und/oder Farbgebung.

### Bezugszeichenliste

- 1: Kaffeeautomat
- 2: Feuchtraum
- 3: Trockenraum
- 4: Lüftungskanal
- 5: Öffnung
- 6: Deckel
- 7: Tropfschale
- 8: Steuerungselektronik
- 9: Brüheinrichtung
- 10: Tresterkanal

## Patentansprüche

1. Kaffeeautomat (1) mit einem Feuchtraum (2), der über einen Lüftungskanal (4) mit einer Öffnung (5) an einem oben angeordneten Deckel (6) und über eine Frischluftöffnung mit der Umgebung verbunden ist, **dadurch gekennzeichnet, dass** die Öffnung (5) derart am Deckel (6) angeordnet ist, dass sie zugleich als Abflussöffnung für sich auf dem Deckel (6) befindliche Flüssigkeit dient, die über die Abflussöffnung und den Lüftungskanal (4) in den Feuchtraum (2) abgeleitet wird.

2. Kaffeeautomat nach Anspruch 1, **dadurch gekennzeichnet, dass** der Feuchtraum (2) mit einer Tropfschale (7) verbunden ist.

3. Kaffeeautomat nach Anspruch 1 oder 2, **dadurch gekennzeichnet, dass** eine Brüheinrichtung (9) vorgesehen ist, die zumindest in geöffnetem Zustand mit dem Lüftungskanal (4) verbunden ist.

4. Kaffeeautomat nach Anspruch 3, **dadurch gekennzeichnet, dass** die Brüheinrichtung (9) über einen Tresterkanal (10) mit dem Feuchtraum (2) verbunden ist.

5. Kaffeeautomat nach einem der Ansprüche 1 bis 4, **dadurch gekennzeichnet, dass** die Frischluftöffnung in einem bodennahen Bereich des Feuchtraums (2) angeordnet ist.

6. Kaffeeautomat nach einem der Ansprüche 1 bis 5, **dadurch gekennzeichnet, dass** der Deckel (6) einen geneigten Boden aufweist, an dessen tiefster Stelle die Abflussöffnung angeordnet ist.

7. Kaffeeautomat einem der Ansprüche 1 bis 6, **dadurch gekennzeichnet, dass** ein von dem Feuchtraum (2) getrennter Trockenraum (3) vorgesehen ist, in dem eine Steuerungselektronik (8) angeordnet ist.

8. Kaffeeautomat einem der Ansprüche 1 bis 7, **dadurch gekennzeichnet, dass** der Deckel (6) als einstückiges Kunststoffspritzgussteil ausgebildet ist.

## Claims

1. Automatic coffee machine (1) with a wet chamber (2), which is connected to an opening (5) on a lid (6) arranged above via a ventilation duct (4) and to the surrounding environment via a fresh air opening, **characterised in that** the opening (5) is arranged on the lid (6) such that at the same time it serves as a drain opening for liquid situated on the lid (6), which is discharged into the wet chamber (2) via the drain opening and the ventilation duct (4).

2. Automatic coffee machine according to claim 1, **characterised in that** the wet chamber (2) is connected to a drip tray (7).

3. Automatic coffee machine according to claim 1 or 2, **characterised in that** a brewing facility (9) is provided, which is connected to the ventilation duct (4) at least in the opened state.

4. Automatic coffee machine according to claim 3, **characterised in that** the brewing facility (9) is connected to the wet chamber (2) via a used coffee grounds duct (10).

5. Automatic coffee machine according to one of claims 1 to 4, **characterised in that** the fresh air opening is arranged in a region of the wet chamber (2) close to the base.

6. Automatic coffee machine according to one of claims 1 to 5, **characterised in that** the lid (6) has an inclined base, with the drain opening being arranged at the deepest point thereof.

7. Automatic coffee machine according to one of claims 1 to 6, **characterised in that** there is provision for a dry chamber (3) separated from the wet chamber (2), in which a control electronics unit (8) is arranged.

8. Automatic coffee machine according to one of claims 1 to 7, **characterised in that** the lid (6) is embodied as a single-piece plastic injection moulded part.

## Revendications

1. Machine à café (1) avec un espace humide (2) qui est relié à l'environnement immédiat par l'intermédiaire d'un canal d'aération (4) avec une ouverture (5) au niveau d'un couvercle (6) disposé sur le dessus et par l'intermédiaire d'une ouverture pour air frais, **caractérisée en ce que** l'ouverture (5) est disposée au niveau du couvercle (6) de telle sorte qu'elle sert en même temps d'ouverture de drainage pour le liquide qui se trouve sur le couvercle (6) et qui est évacué par l'intermédiaire de l'ouverture de drainage et du canal d'aération (4) dans l'espace humide (2).

2. Machine à café selon la revendication 1, **caractérisée en ce que** l'espace humide (2) est relié à un bac à gouttes (7).

3. Machine à café selon la revendication 1 ou 2, **caractérisée en ce qu'**un dispositif de mise en ébullition (9) est prévu, qui est relié au canal d'aération (4) au moins à l'état ouvert.

4. Machine à café selon la revendication 3, **caractérisée en ce que** le dispositif de mise en ébullition (9) est relié à l'espace humide (2) par l'intermédiaire d'un canal à marc (10).

5. Machine à café selon l'une des revendications 1 à 4, **caractérisée en ce que** l'ouverture pour air frais est disposée dans une zone, proche du fond, de l'espace humide (2).

6. Machine à café selon l'une des revendications 1 à 5, **caractérisée en ce que** le capot (6) présente un fond incliné au niveau du point le plus bas duquel est disposée l'ouverture de drainage.

7. Machine à café selon l'une des revendications 1 à 6, **caractérisée en ce qu'**un espace sec (3) séparé de l'espace humide (2) est prévu, dans lequel est disposée une électronique de commande (8).

8. Machine à café selon l'une des revendications 1 à 7, **caractérisée en ce que** le couvercle (6) est réalisé en tant que pièce moulée par injection de matière plastique d'un seul tenant.
